Europäisches Patentamt

(19) European Patent Office

Office européen des brevets

(11) Publication number: **0 011 656**
**B1**

## (12) EUROPEAN PATENT SPECIFICATION

(45) Date of publication of patent specification: **12.01.83**

(51) Int. Cl.³: **B 23 B 47/28**

(21) Application number: **78101505.2**

(22) Date of filing: **01.12.78**

(54) Doweling jig.

(43) Date of publication of application:
**11.06.80 Bulletin 80/12**

(45) Publication of the grant of the patent:
**12.01.83 Bulletin 83/2**

(84) Designated Contracting States:
**BE CH DE FR GB IT NL SE**

(56) References cited:
**DE - A - 2 316 435**
**FR - A - 2 095 995**
**GB - A - 1 406 527**
**US - A - 1 432 485**
**US - A - 2 556 131**
**US - A - 2 629 937**
**US - A - 2 641 147**
**US - A - 2 814 219**
**US - A - 2 934 979**
**US - A - 3 019 675**
**US - A - 3 053 121**
**US - A - 3 062 076**
**US - A - 3 273 426**
**US - A - 3 674 376**

(73) Proprietor: **Wiggins, Garfield**
**162 Burnett Avenue**
**Maplewood New Jersey (US)**

(72) Inventor: **Wiggins, Garfield**
**162 Burnett Avenue**
**Maplewood New Jersey (US)**

(74) Representative: **Baillie, Iain Cameron et al,**
**c/o Ladas & Parry Isartorplatz 5**
**D-8000 München 2 (DE)**

Courier Press, Leamington Spa, England.

Doweling jig

This invention relates broadly to small and relatively light hand tools for use in carpentry and cabinetry and more particularly to improvements in a doweling jig of the type that is clamped directly to the work and adapted for use with wood or composition board.

In woodworking and similar arts many expedients have been employed for drilling matching dowel pin holes in order to join members with concealed dowel pins so that they present aligned surfaces. Various doweling jigs are disclosed in the prior art such as in US—A—2,522,400; 2,260,784; 3,708,237; 2,583,283 and 2,602,238. DE—A—2316435 discloses a doweling jig for drilling a series of parallel holes which has a top with a hole therein for drilling, side walls and an adjustable stop. The head of the jig having the drill hole therein is moved along a notched rod, each notch corresponding to where the holes are to be drilled. The head is placed in position on the rod in one of the notches and is secured in place by a set screw. After the hole is drilled, the set screw is released and the head slid along the rod to the next notch where the set screw is tightened again. This procedure is repeated for each hole and in operation it is also necessary to carefully position the rods and the associated clamps which must be rigid.

These prior art doweling jigs concern set-up or adjustments that are necessary each time a different thickness of lumber is used.

The principal object of this invention is to provide a jig with fixed position drill guides or bushings for the accurate drilling of multiple, like-size matching dowel pin holes for the joining of wood with concealed dowel pins, with the pieces being precisely positioned and aligned.

Another object of the invention is to provide a jig with means by which it can be quickly, accurately and securely positioned on the workpiece and one requiring minimal visual alignment; with such alignment, when necessary, being done with an end of the jig, which affords excellent visibility with a mark on the edge or face of the workpiece to designate the relative position of the pieces to be joined.

In accordance with the invention, there is provided a dowel jig for use in drilling matching holes in two separate pieces of stock comprising a horizontally elongated channel having a flat top and two parallel side members, said top having an undersurface parallel with its upper surface and having a spaced series of vertical guide bushings through which a drill bit can pass for making spaced holes in the piece of stock held in contact with said undersurface, one of said side members having attached clamping means for clamping the piece of stock longitudinally against the other side member and said undersurface in a position for drilling operation thereon, characterized by the fact that the guide bushings are spaced along and parallel to the longitudinal axis of the channel (10) and further characterized by an eccentric stop disk at each end of said channel to form with the flat top and the adjacent side member a trihedral angle and constituting a stop against which the end or the edge of the stock is positioned thereto, each of said stops being pivotal to move out of such stop position.

The invention will be described with reference to the drawings in which:

Figure 1 is an isometric view of one form of the jig of the invention;

Figure 2 is similar to Figure 1, except that the drill head has been removed;

Figure 3 shows a drill head in reverse configuration for ease of illustration, with various configurations of drilling holes with an extended portion for fitting into the cut out portion of the channel of Figure 2;

Figure 4 is a partially sectional isometric view of another form of the dowel jig having a reversible clamping plate and a dual channel;

Figure 5 is an isometric view of the clamping plate of Figure 4;

Figure 6 is an isometric view of a jig having an eccentrically activated clamping plate.

Figure 7 is an isometric view showing the construction of the eccentric lever for the clamping plate shown in Figure 6;

Figure 8 is a partially sectional isometric view of another form of the invention having a reversible clamping plate, a single channel and a dual head;

Figure 9 is an exploded perspective view showing a portion of the dowel jig with a second type of clamping means.

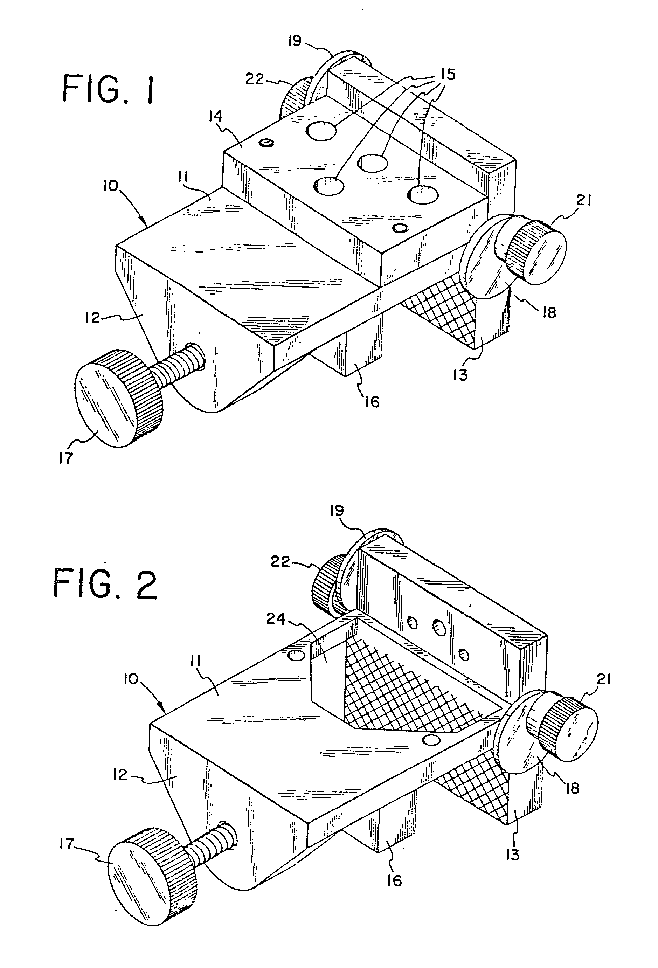

One mode of construction is a jig with interchangeable heads as shown in Figures 1 and 2. The interchangeable heads permit with each positioning of the jig, the drilling of aligned holes for doweling a piece of lumber of standard stock thickness. In addition to lumber and plywood, the jig can be used for doweling particle board or any light synthetic materials that would normally be drilled with a portable electric drill. Another advantageous use of the jig is for mortising. This is easily accomplished by inching the jig along a workpiece and drilling through the multiple aligned drill guides to produce overlapping holes for making a mortise of any length.

With an interchangeable head containing one or more offset drill guides, or any jig with this feature, dowel holes may be drilled in a zig-zag pattern. This is particularly advantageous as it strengthens a joint and eliminates any tendency towards twisting. In addition, offset doweling expands the use of the head to other stock of greater thickness. Typically, one drilling configuration is for positioning 0.635 cm (1/4")

**0011656**

dowel pin holes in 1.27 cm (1/2"), 1.56 cm (5/8"), 1.90 cm (3/4") and 3.18 cm (5/4") material.

As shown in the drawings, my improved doweling jig has a horizontally elongated channel generally indicated at 10 with a flat top 11 and two parallel side members 12, 13. The flat top surface is fitted with a drilling plate 14 with a special spaced series of vertical guide drilling holes or bushings generally indicated at 15. The guide bushings allow a drill bit to pass through and drill the required holes in alignment in the stock. The guide holes are spaced in precise relationship to allow utilization of the jig in its most useful manner. Such a configuration will allow a work piece to be inserted in either side of the jig to drill corresponding holes in the work piece. As an illustration in a three hole configuration the center hole is equal distance from each side of the jig. The two other holes are aligned to be equal distance from the end of the jig and each the same distance from its closer side of the jig or the corresponding hole. A clamping means comprising a plate 16 and an adjustment screw 17 passes through one of the side members 12 for clamping the piece of stock to be drilled longitudinally against the opposite side member and the undersurface of the top of the channel. Eccentric stop disks are provided at each end of the channel to form a trihedral angle and constituting a stop against which an end or edge of the stock is positioned. The eccentric stops are generally circular plates 18, 19 having a set screw 21, 22 passing through off center for securing the disk to the channel. By loosening the set screw it is possible to rotate the disk so that it is out of position and does not block the channel or interfere with the jig resting squarely on the work piece.

In Figure 1 the right hand disk is in position and the left hand disk is out of blocking position.

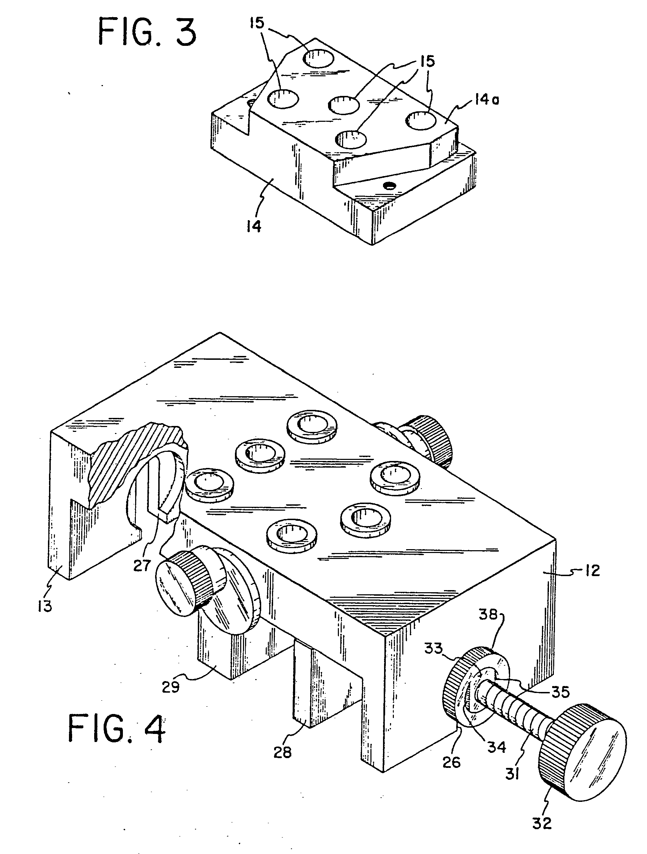

As seen in Figure 1 and 3 drilling plates of various configurations of holes can be affixed to the upper surface of the channel by set screws such as of the Allen type. The upper surface of the channel 10 is provided with a cut out section 24 to allow fitting of a corresponding configuration 14a on the plate which extends through section 24 and is flush with the underside of the channel and contacts the stock to be drilled. This configuration improves wood chips clearance generated by the drilling of the holes in the work piece. As shown in Figure 3, the head has five guides for drilling stock of four different thicknesses with the same head. As a general rule to obtain satisfactory drilling of holes the guide should be not less than twice the diameter of the drill in order to guide it straight.

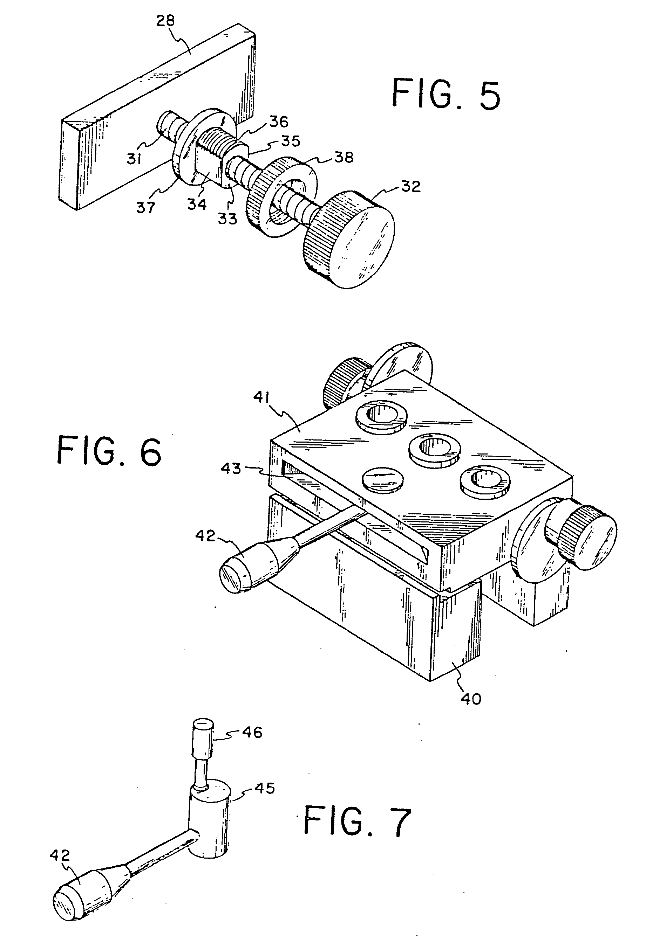

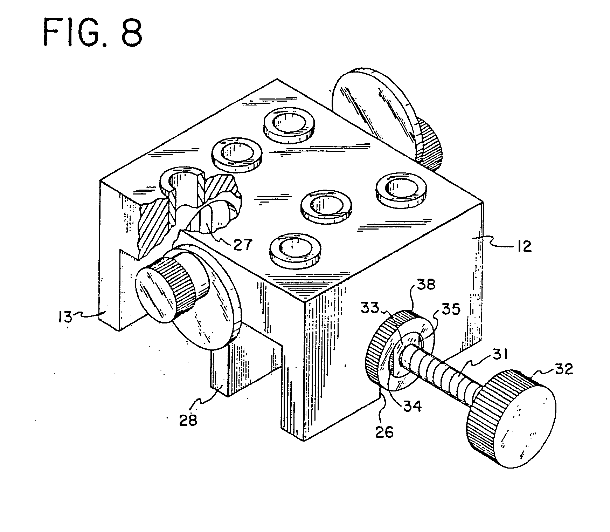

The configurations in Figures 4 and 8 show the side members 12 and 13 of the channel are provided with slots 26, 27 so that the clamping member generally indicated at 28 and shown in Figure 5 can be switched from one side to the other for quick reversing of the jig. In a preferred arrangement each slot has a recessed portion to receive stop means 37 for a compact structure. The use of interchangeable heads on the jig shown in Figure 4 converts it to two different jigs with each change. The modification necessary for a flat plate type of interchangeable head for use on this jig requires openings to be made in the top member of the jig of Figure 4 to permit passage of two configurations of drill bushings embedded or press fitted in the heads. Figure 4 shows a center fence 29 in the channel against which the work piece can be clamped. In Figure 8 the center fence has been removed and the opposite side member is utilized for the clamping surface.

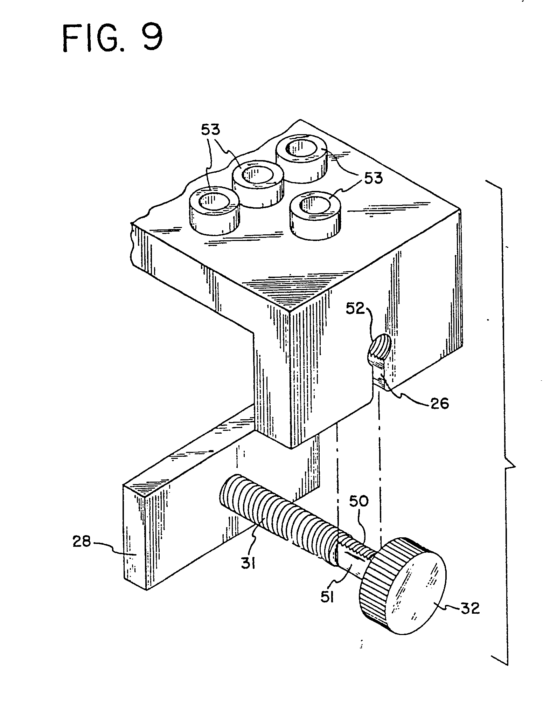

The clamping means shown in Figure 9 represents a novel arrangement for such clamping. It comprises a pressure plate 28 connected to an adjustment screw 31 with a turning knob 32 on the opposite end. The adjustment screw 31 is made to pass into the slot 26 by means of two parallel flat surfaces 50, 51 cut into the screw preferably adjacent to the knob 32, so that the thickness of the remaining part of the screw at such flat surfaces is such as to allow the screw to slide into the slot. The slot 26 has a top portion 52 which is threaded to receive the adjustment screw 31. In this preferred arrangement, the offset bushing 53 is positioned further from the fence to expand the doweling range to pieces 3.81 to 5.08 cm (1-1/2 to 2") in thickness while still retaining the three aligned bushings for doweling pieces 1.90 cm (3/4") thick. In operation the adjustment screw passes into the slot at the flat parallel surfaces until it reaches the threaded portion. By rotating the adjustment screw it will engage the threaded portion for movement of the pressure plate into or away from engagement with the piece of stock. When the clamping means is to be removed the screw can be turned to align the flat surfaces with the slot and allow the removal of the clamping means from the slot.

The clamping means shown in Figure 5 represents a novel arrangement for such clamping. It comprises a pressure plate 28 rotatably connected to an adjustment screw 31 with a turning knob 32 made to pass through the slot 26. The screw is fitted with a nut 33 with two flat parallel sides 34 and 35 which fit into the slot 26 thereby preventing turning. The nut is provided with a threaded end 36 which is sufficiently long to extend through the slot. A stop means 37 is secured to the opposite end of said nut which is larger than the width of the slot 26 for pressing against one side of the slot and in conjunction with a second nut 38 larger than the width of the slot 26 for screwing onto the threaded end of the first nut and pressing against the opposite surface of the slot. Adjustment of the two nuts allows tightening the nuts in a rigid configuration with the slot which still allows movement of the adjustment screw 31 and in a loosened position allows the ready removal of the clamping device from the slot for positioning in the opposite slot.

Figure 6 shows a clamping device which has an eccentric. In this modification one side member 40 of the channel 41 is pivotately connected to the channel. A rod 42 fits through a slot 43 cut in the side of the channel 41 which allows the rod to be moved in one direction to clamp the work piece in the channel formed by the top and the two side members and in the opposite direction to loosen the side member 40 to allow removal of the work piece from the channel. The construction of the eccentric is shown in Figure 7. It comprises an elongated cylinder 45 with an off-set center pin 46 affixed to one end. The rod 42 is secured at a right angle to the cylinder such as by a threaded end screwing into the cylinder 45. A hole is provided in channel 40 in which the pin 46 fits. When the rod 42 is moved in one direction it allows a tight configuration and a loose fit when moved in the opposite direction. Lack of adjustability limits this clamping method to the one thickness of stock for which it is designed.

The doweling jig of the invention has many advantages. One such advantage is that there is no measuring with respect to the dowel hole positions, it requires no line to line marking to designate dowel hole centers as is customary with many devices of this nature, and the use of which makes possible the principal objective of drilling multiple, like size, precisely positioned and matched dowel pin holes; assuring aligned surfaces in materials to be joined by doweling. This ordinarily difficult and time consuming task is made easy, fast and efficient to such an extent that a novice can quickly make doweled joinings of an excellence unsurpassed by the most proficient cabinet maker, regardless of the type of said joinings; whether they are "butt", "mitered at any degree", a "T" or "edge to edge". Excellent visibility and multiple drilling also makes it easier to dowel a "right angle joining", which is an edge joining with a flat surface. It is easily accomplished with the aid of a narrow wood ripping as an accessory; by temporarily securing it to the flat surface in the desired position of joining for the expressed purpose of providing a means of fastening the jig thereto while drilling the dowel pin holes through the ripping to the desired depth in the flat surface. The same ripping can be used in similar joinings and actual drilling through this piece occurs only in its first use.

The method of using the jig of the invention is as follows: attach a depth control collar on bit before drilling. The jig must rest squarely on the work. Overlay the jig on the work, with the fence against the face; taking care that it is properly positioned for drilling holes in the edge or end as desired. Dowel holes are always at right angles to the contacting surfaces which are to be joined. Each joining consists of a right and left-hand member, and doweling involves the use of each end of the jig for its positioning. Work lines are necessary on either face or edge of joinings such as "edge to edge", "mitered", and the cross member of a "T". An identifying mark on the face of the work at the common point of every joining, and on the edge or end to be drilled saves time as it facilitates correct attachment of the jig. A stop may be used for positioning the jig on each piece of a corner butt joint. The most confined areas for dowel holes are the ends of narrow pieces. If they are drilled first, the drill guide or guides to use in the opposite member becomes apparent. The order for drilling is of no significance provided the holes match, dowels are concealed, and sufficient stock is left opposite the guiding end of the jig. Correct usage results in mated holes and aligned surfaces and can be attained by using the jig with the fence against the face of the work.

The jig of this invention can be made in a number of different ways. The one with eccentric clamping lends itself to plastic injection molding or die casting in either aluminum or an alloy metal, either of which would have embedded drill bushings. The eccentric piece would be in steel and produced by screw machine. The leverage arm would preferably be casting. The preferred method for the basic structure of the jig with interchangeable heads is die casting. Heads, with embedded drill bushings can be cast or molded separately or bushings can be press fitted in the heads. The heads with drill guide holes can be produced by "the lost wax" method in investment casting. The latter is done by making a replica of the steel heads, such as the machined ones.

Drill bushings in jigs, or in interchangeable heads, will protrude above the surface so as to prevent wearing of the materials into which they are embedded, or press fitted. There are no adjustments on jigs constructed under the principles of this invention. If the jig in use has a head with an offset drill guide or guides, a change in set-up may not be necessary as each head with this feature will accommodate a minimum of two thicknesses of lumber; with one of the heads accommodating four thicknesses.

However, if a head with drill guides of another size, or one without the offset feature is desired, a change of heads is necessary. After a head is changed, the jig is properly positioned on one of the workpieces, holes are drilled, and jig repositioned for drilling of matching holes.

## Claims

1. A dowel jig for use in drilling matching holes in two separate pieces of stock comprising a horizontally elongated channel (10) having a flat top (11) and two parallel side members (12, 13, 40), said top having an undersurface parallel with its upper surface and having a spaced series of vertical guide

7 0011656 8

bushings (15) through which a drill bit can pass for making spaced holes in the piece of stock held in contact with said undersurface, one of said side members (12) having attached clamping means (16, 17) for clamping the piece of stock against the other side member (13) and said undersurface in a position for drilling operation thereon, characterized by the fact that the guide bushings are spaced along and parallel to the longitudinal axis of the channel (10) and further characterized by an eccentric stop disk (18, 19) at each end of said channel to form with the flat top (11) and the adjacent side member (13) a trihedral angle and constituting a stop against which the end of the edge of the stock is positioned thereto, each of said stops being pivotal to move out of such stop position.

2. A dowel jig according to claim 1, characterized by the fact that the top of the channel is provided with a large opening (24) and the guide bushings (15) are located in a separate plate (14) removably affixed over said opening.

3. A dowel jig according to claim 1, characterized by the fact that one of the side members (40) is pivotally connected to the undersurface of the flat top of the channel (41) to form the clamping means when in its aligned position to form said channel, said side member being moved into clamping position by the action of an eccentric activating means (42, 45, 46).

4. A dowel jig according to any one of the preceding claims, characterized by the fact that at least one of the side members (12, 13) contains an open ended slot (26, 27) having a threaded portion (52) at its closed end and said clamping means comprises a pressure plate (28) affixed to an adjustment screw (31) having two parallel flat surfaces (50, 51) which allows passage of said screw into said slot and in engagement with said threaded portion to allow movement of said pressure plate against the piece of stock by rotation of said screw in one direction and release of the stock when rotated in the opposite direction.

5. A dowel jig according to claim 1, characterized by the fact that the channel contains a spacer fence (29) dividing the channel into a first channel and a second channel, each of said first and second channels having a longitudinally spaced series of vertical guide bushings and said clamping means (28) being reversible to allow clamping the piece of stock longitudinally against either side of said spacer fence.

6. A dowel jig according to claim 5, characterized by the fact that the clamping means fits into an open ended slot (26, 27) in the lower surface of each of the side members (12, 13) and comprises a pressure plate (28) rotatably connected to an adjustment screw (31) passing through said slot, said screw having a nut (33) with two flat parallel sides (34, 35) which fit into said slot and a threaded end (36), a stop means (37) secured to said nut opposite to said threaded end for pressing against one side of said slotted side member and a second nut (38) for pressing against the opposite surface of said side member when screwed onto said threaded end of said first nut thereby firmly clamping said adjustment screw into said slot without interfering with the lateral movement of the adjustment screw against said pressure plate for securing the piece of stock in drilling position.

7. A dowel jig according to any one of the preceding claims, characterized by the fact that the vertical guide bushings (15) are aligned parallel to one of the side members and are two in number, each guide bushing being spaced the same distance from its corresponding open end of the channel as the other guide bushing.

8. A dowel jig according to claim 7, characterized by a third bushing spaced equal distance from each open end of the channel.

## Patentansprüche

1. Paßloch-Bohrvorrichtung für die Verwendung beim Bohren von zueinander passenden Löchern in zwei getrennten Werkstücken, mit einem horizontal langgestreckten, U-profilförmigen Teil (10), der eine ebene Decke (11) und zwei parallele Seitenteile (12, 13, 40) besitzt, wobei die untere Fläche der Decke zu deren oberer Fläche parallel ist und die Decke mit einer Reihe von in Abständen voneinander angeordneten Führungsbuchsen (15) ausgebildet ist, durch die ein Bohrwerkzeug zum Ausbilden von in Abständen voneinander angeordneten Löchern in einem mit der genannten unteren Fläche in Berührung gehaltenen Werkstück hindurchtreten kann, und an dem einen der Seitenteile (12) Spannmittel (16, 17) zum Spannen des Werkstückes gegen den anderen Seitenteil (13) und die genannte untere Fläche in einer Position für die Durchführung des Bohrvorganges an dem Werkstück angebracht sind, dadurch gekennzeichnet, daß die Führungsbuchsen längs der Längsachse des U-profilförmigen Teils (10) und parallel zu ihr in Abständen voneinander angeordnet sind, daß an jedem Ende des U-profilförmigen Teils eine exzentrische Anschlagscheibe (18, 19) angeordnet ist, die mit der ebenen Decke (11) und dem benachbarten Seitenteil (13) einen Dreikant bildet und einen Anschlag darstellt, mit dem das Ende des Randes des Werkstückes in Anlage gebracht wird, und daß jeder dieser Anschläge aus dieser Anschlagstellung herausschwenkbar ist.

2. Paßloch-Bohrvorrichtung nach Anspruch 1, dadurch gekennzeichnet, daß die Decke des U-profilförmigen Teils mit einer großen Ausnehmung (24) versehen ist und die Führungsbuchsen (15) in einer eigenen Platte (14) angeordnet sind, die über der Ausnehmung abnehmbar befestigt ist.

3. Paßloch-Bohrvorrichtung nach Anspruch 1, dadurch gekennzeichnet, daß einer der Seitenteile (40) mit der unteren Fläche der ebenen Decke des U-profilförmigen Teils (41) derart schwenkbar verbunden ist, daß dieser Seitenteil, wenn er sich unter Bildung des U-profilförmigen Teils in seiner flichtenden Stellung befindet, die Spanneinrichtung darstellt, und dieser Seitenteil mittels einer exzentrischen Betätigungseinrichtung (42, 45, 46) in die Spannstellung bewegbar ist.

4. Paßloch-Bohrvorrichtung nach einem der vorhergehenden Ansprüche, dadurch gekennzeichnet, daß mindestens einer der Seitenteile (12, 13) einen am Langloch (26, 27) besitzt, das am einen Ende offen und an seinem geschlossenem Ende mit einem Gewinde (52) versehen ist, und die Spanneinrichtung eine Andrückplatte (28) umfaßt, die an einer Einstellschraube (31) befestigt ist, die zwei parallele, ebene Flächen (50, 51) besitzt, die einen Eintritt der Schraube in das Langloch und einen Eingriff der Schraube in das genannte Gewinde gestattet, so daß durch eine Drehung der Schraube in einer Richtung die Andrückplatte gegen das Werkstück bewegbar und durch eine Drehung der Schraube in der Gegenrichtung eine Freigabe des Werkstückes möglich ist.

5. Paßloch-Bohrvorrichtung nach Anspruch 1, dadurch gekennzeichnet, daß der U-profilförmige Teil einen Abstandhaltezaun enthält, der den U-profilförmigen Teil in einen ersten und einen zweiten U-profilförmigen Teil teilt, von denen jeder mit einer Reihe von in Längsabständen voneinander angeordneten, vertikalen Führungsbuchsen versehen ist, und daß die Spanneinrichtungen (28) in zwei Richtungen bewegbar sind, um ein Spannen des Werkstückes gegen jede Seite des Abstandhaltezauns zu ermöglichen.

6. Paßloch-Bohrvorrichtung nach Anspruch 5, dadurch gekennzeichnet, daß die Spanneinrichtung in ein am Ende offenes Langloch (26, 27) in der unteren Fläche jedes der Seitenteile (12, 13) paßt und eine Andrückplatte (28) umfaßt, die drehbar mit einer das Langloch durchsetzenden Einstellschraube (31) verbunden ist, die einer Mutter (33) besitzt, die zwei in das Langloch passende, ebene Seitenflächen (34, 35) und einen gewindetragenden Endteil (36) hat und an der dem gewindetragenden Endteil entgegengesetzt eine Anschlageinrichtung (37) ist, zum Angriff an einer Seite des mit dem Langloch ausgebildeten Seitenteils befestigt ist, ferner eine zweite Mutter (38) zum Angriff an der entgegengesetzten Fläche des genannten Seitenteils durch Aufschrauben auf das gewindetragende Ende der ersten Mutter, so daß die Einstellschraube in dem Langloch fest eingespannt ist, ohne daß die Seitwärtsbewegung der Einstellschraube gegen die Andrückplatte zum Festlegen des Werkstückes in der Bohrstellung behindert wird.

7. Paßloch-Bohrvorrichtung nach einem der vorhergehenden Ansprüche, dadurch gekennzeichnet, daß zwei vertikale Führungsbuchsen (15) vorgesehen und zu einem der Seitenteile parallel sind und jede dieser Führungsbuchsen von dem ihr entsprechenden offenen Ende des U-profilförmigen Teils in demselben Abstand angeordnet ist wie die andere Führungsbuchse.

8. Paßloch-Bohrvorrichtung nach Anspruch 7, dadurch gekennzeichnet, daß eine dritte Buchse in gleichen Abständen von den beiden offenen Enden des U-profilförmigen Teils angeordnet ist.

**Revendications**

1. Un gabarit de chevillage, permettant le perçage de trous homologues dans deux panneaux de construction, comportant une gorge (10) s'étendant horizontalement et ayant un dessus plat (11) et deux côtés parallèles (12, 13, 40), le dessus ayant une face inférieure et une face supérieure parallèles, ainsi qu'une série de douilles de guidage (15) espacées laissant passer un foret pour percer des trous espacés dans le panneau maintenu en contact avec la face inférieure, l'un des côtés (12) étant relié à des moyens de serrage (16, 17) assurant le serrage du panneau contre l'autre côté (13) et celui de la face inférieure dans une position permettant le perçage par-dessus celle-ci, caractérisé en ce que les douilles de guidage sont réparties le long de l'axe longitudinal de la gorge (10), parallèlement à celui-ci, et en ce qu'il comporte en outre, à chaque extrémité de la gorge, un disque de butée (18, 19) excentrique formant un trièdre avec le dessus plat (11) et le côté adjacent (13), et constituant une butée contre laquelle est positionné le bord du panneau, chacune de ces butées étant pivotante pour pouvoir s'écarter de cette position formant butée.

2. Un garbarit de chevillage selon la revendication 1, caractérisé en ce que le dessus de la gorge comporte un grand évidement (24), et en ce que les douilles de guidage sont disposées sur une plaque séparée (14) fixée de manière séparable par-dessus l'évidement.

3. Un gabarit de chevillage selon la revendication 1, caractérisé en ce que l'un des côtés (40) est monté à pivotement sur la face inférieure du dessus de la gorge (41), de manière à former moyen de serrage lorsqu'il est dans la position alignée formant côté de la gorge, ce côté étant déplacé jusqu'en position de serrage par des moyens de manoeuvre à excentrique (42, 45, 46).

4. Un gabarit de chevillage selon l'une quelconque des revendications précédentes, caractérisé en ce qu'au moins l'un des côtés (12, 13) est pourvu d'une entaille ouverte (26, 27) ayant une partie filetée (52) à son extrémité fermée, et en ce que les moyens de serrage comprennent une plaque de pression (28) reliée à une vis de réglage (31) munie de deux pans parallèles (50, 51) autorisant la mise en place de la vis dans l'entaille et son engagement avec la partie filetée, de façon que la rotation de la vis dans un sens déplace la plaque de pression contre le panneau, et que la rotation dans l'autre sens libère celui-ci.

5. Un gabarit de chevillage selon la revendication 1, caractérisé en ce que la gorge comprend une cloison de séparation (29) divisant la gorge en une première gorge et une seconde gorge, chacune de ces première et seconde gorges étant pourvu d'une série de douilles de guidage espacées, et les moyens de serrage (28) étant réversibles de manière à permettre le serrage du panneau longitudinalement contre l'une ou l'autre des faces de la cloison.

6. Un gabarit de chevillage selon la revendication 5, caractérisé en ce que les moyens de serrage s'adaptent dans une entaille ouverte (26, 27) pratiquée à la partie inférieure de chacun des côtés (12, 13) et comprennent une plaque de pression (28) reliée à rotation à une vis de réglage (31) traversant l'entaille, cette vis étant pourvue d'un écrou (33) ayant deux pans parallèles (34, 35) s'adaptant dans l'entaille ainsi qu'une extrémité filetée (36), des moyens de butée (37) fixés à l'écrou à l'extrémité opposée à l'extrémité filetée et appuyant sur l'une des faces du côté entaillé, ainsi qu'un second écrou (38) appuyant sur la face opposée du côté entaillé lorsqu'il est vissé sur l'extrémité filetée du premier écrou, de manière à maintenir fermement la vis de réglage à l'intérieur de l'entaille sans gêner le mouvement latéral de la vis de réglage contre la plaque de pression, qui assure le maintien du panneau en position de perçage.

7. Un gabarit de chevillage selon l'une quelconque des revendications précédentes, caractérisé en ce que les douilles de guidage verticales (15) sont alignées parallèlement à l'un des côtés et sont au nombre de deux, chaque douille de guidage étant à la même distance de l'extrémité ouverte correspondante de la gorge que l'autre douille de guidage.

8. Un gabarit de chevillage selon la revendication 7, caractérisé en ce qu'il comprend également une troisième douille équidistante de chaque extrémité ouverte de la gorge.

# 0011656

FIG. 1

FIG. 2

1

FIG. 3

15
15
14a
14

FIG. 4

13
27
29
28
26
34
31
32
33
38
35
12

FIG. 5

FIG. 6

FIG. 7

0011656

# FIG. 8

4

# FIG. 9